(19) Europäisches Patentamt
European Patent Office
Office européen des brevets

(11) **EP 4 761 156 A1**

(12) **EUROPEAN PATENT APPLICATION**
published in accordance with Art. 153(4) EPC

(43) Date of publication:
**17.06.2026 Bulletin 2026/25**

(21) Application number: **24944455.5**

(22) Date of filing: **23.12.2024**

(51) International Patent Classification (IPC):
**H04L 1/1812** (2023.01)

(52) Cooperative Patent Classification (CPC):
**H04L 1/00; H04L 1/1812**

(86) International application number:
**PCT/CN2024/141405**

(87) International publication number:
**WO 2026/000891 (02.01.2026 Gazette 2026/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.06.2024 CN 202410840320**

(71) Applicant: Hygon Information Technology Co.,
Ltd.
Tianjin 300392 (CN)

(72) Inventors:
• **WANG, Yuxuan**
Tianjin 300392 (CN)
• **ZHOU, Peng**
Tianjin 300392 (CN)
• **XIE, Fei**
Tianjin 300392 (CN)

(74) Representative: **Maiwald GmbH
Elisenhof
Elisenstraße 3
80335 München (DE)**

(54) **DATA PROCESSING METHOD, DATA PROCESSING APPARATUS, MEMORY CONTROLLER, ELECTRONIC DEVICE, STORAGE MEDIUM, AND COMPUTER PROGRAM PRODUCT**

(57)     A data processing method, a data processing apparatus, a memory controller, an electronic device, a storage medium, and a computer program product. The data processing method comprises: acquiring data to be transmitted that comprises first data and second data; generating a data block to be transmitted that comprises a first data block generated from the first data and a second data block generated from the second data, and an error correction data block corresponding to the data block to be transmitted, wherein the sum of the number of symbols in the second data block and the number of symbols in the error correction data block is adapted to the data transmission capacity of a data channel for transmitting redundant data, and the ratio of the number of symbols in the second data block to the number of symbols in the error correction data block is less than or equal to 1:3; interleaving error correction data groups to obtain a target data block comprising a payload data area and a redundant data area, the redundant area being transmitted on the basis of the data channel for the redundant data, and comprising multiple rows of data, wherein at least one row of data comprises both the second data and error correction data, and at least one row of data comprises only error correction data; and transmitting the target data block to a preset device.

FIG. 3

**Description**

This application claims the priority and benefits of Chinese patent application No.202410840320.1 filed on June 26, 2024, the entire disclosure of which is incorporated hereby reference as a part of the present application.

TECHNICAL FIELD

Embodiments of the present disclosure relate to a data processing method, a data processing apparatus, a memory controller, an electronic device, a storage medium and a computer program product.

BACKGROUND

In computer systems, the ECC (Error Correction Code) technology is a commonly used error correction technology for detecting and correcting errors by adding redundant error correction data to the data. However, the addition of redundancy inevitably increases the overall size of the data, resulting in a decrease in the amount of data that can actually be stored and transmitted, and the inability to store and transmit more data.
In this context, how to provide a data processing method to store and transmit more data while ensuring the quality of data transmission becomes a technical problem to be solved urgently by a person skilled in the art.

SUMMARY

In view of the foregoing contents, embodiments of the present disclosure relate to a data processing method, a data processing apparatus, a memory controller, an electronic device, a storage medium and a computer program product, so as to store and transmit more data while ensuring data transmission quality.
To achieve the above-mentioned purpose, the embodiment of the present disclosure adopts the following technical solutions.
In a first aspect, a data processing method is provided by an embodiment of the present disclosure. This method includes:

acquiring data to be transmitted, wherein the data to be transmitted includes first data and second data;
generating, based on the data to be transmitted, a data block to be transmitted and an error correction data block corresponding to the data block to be transmitted, wherein the data block to be transmitted includes a first data block generated by the first data and a second data block generated by the second data, and one data block to be transmitted and one error correction data block corresponding to the one data block to be transmitted form one error correction data group; and a sum of a total number of symbols of the second data block and a total number of symbols of the error correction data block is adapted to data transmission amount of a data channel for transmitting redundant data, and a ratio of the total number of symbols of the second data block and the total number of symbols of the error correction data block is less than or equal to 1:3;
interleaving the error correction data group to obtain a target data block, wherein the target data block includes a valid data region obtained by interleaving the first data and a redundant data region obtained by interleaving error correction data and the second data; and the redundant data region is transmitted based on the data channel of the redundant data, the redundant data region includes a plurality of rows of data, at least one row of data includes both the second data and the error correction data, and at least one row of data includes only the error correction data; and
transmitting the target data block to a preset component based on a transmission rule of the target data block.

In a second aspect, a data processing method is provided by an embodiment of the present disclosure. This method includes:

acquiring a target data block, wherein the target data block is obtained by interleaving based on an error correction data group, the error correction data group includes a data block to be transmitted and an error correction data block corresponding to the data block to be transmitted, and the data block to be transmitted includes a first data block generated by first data and a second data block generated by second data; the target data block includes a valid data region obtained by interleaving the first data and a redundant data region obtained by interleaving error correction data and the second data; and the redundant data region is transmitted based on a data channel of redundant data, the redundant data region includes a plurality of rows of data, at least one row of data includes both the second data and the error correction data, and at least one row of data includes only the error correction data;
de-interleaving the target data block to obtain the error correction data group;
correcting a data error of the data block to be transmitted in the error correction data group based on the error correction data block in the error correction data group; and
generating data to be transmitted based on an error-corrected data block to be transmitted.

In a third aspect, a data processing apparatus is provided by an embodiment of the present disclosure. This apparatus includes:

a first data acquisition module, configured to acquire data to be transmitted, wherein the data to be transmitted includes first data and second data;
a processing module, configured to generate a data block to be transmitted and an error correction data block corresponding to the data block to be transmitted based on the data to be transmitted, wherein the data block to be transmitted includes a first data block generated by the first data and a second data block generated by the second data, and one data block to be transmitted and one error correction data block corresponding to the one data block to be transmitted form one error correction data group; and a sum of a total number of symbols of the second data block and a total number of symbols of the error correction data block is adapted to data transmission amount of a data channel for transmitting redundant data, and a ratio of the total number of symbols of the second data block and the total number of symbols of the error correction data block is less than or equal to 1:3;
an interleaving module, configured to interleave the error correction data group to obtain a target data block, wherein the target data block includes a valid data region obtained by interleaving the first data and a redundant data region obtained by interleaving error correction data and the second data; and the redundant data region is transmitted based on the data channel of the redundant data, the redundant data region includes a plurality of rows of data, at least one row of data includes both the second data and the error correction data, and at least one row of data includes only the error correction data; and
a data transmission module, configured to transmit the target data block to a preset component based on a transmission rule of the target data block.

In a fourth aspect, a data processing apparatus is provided by an embodiment of the present disclosure. This apparatus includes:

a second data acquisition module, configured to acquire a target data block, wherein the target data block is obtained by interleaving based on an error correction data group, the error correction data group includes a data block to be transmitted and an error correction data block corresponding to the data block to be transmitted, and the data block to be transmitted includes a first data block generated by first data and a second data block generated by second data; the target data block includes a valid data region obtained by interleaving the first data and a redundant data region obtained by interleaving error correction data and the second data; and the redundant data region is transmitted based on a data channel of redundant data, the redundant data region includes a plurality of rows of data, at least one row of data includes both the second data and the error correction data, and at least one row of data includes only the error correction data; and
a de-interleaving module, configured to de-interleave the target data block to obtain the error correction data group;
an error correction module, configured to correct a data error of the data block to be transmitted in the error correction data group based on the error correction data block in the error correction data group; and
a data to be transmitted generation module, configured to generate data to be transmitted based on an error-corrected data block to be transmitted.

In a fifth aspect, a memory controller is provided by an embodiment of the present disclosure.
The memory controller is configured with the data processing apparatus as described in the third aspect; and/or the memory controller is configured with the data processing apparatus as described in the fourth aspect.
In a sixth aspect, an electronic device is provided by an embodiment of the present disclosure, which includes the memory controller as described in the fifth aspect.
In a seventh aspect, a storage medium is provided by an embodiment of the present disclosure. The storage medium stores one or more computer executable instructions, wherein when the one or more computer executable instructions are executed, the data processing method as described in the first aspect is implemented, and/or the data processing method as described in the second aspect is implemented.
In an eighth aspect, a computer program product is provided by an embodiment of the present disclosure. The computer program product includes one or more computer executable instructions, wherein when the one or more computer executable instructions are executed, the data processing method as described in the first aspect is implemented, and/or the data processing method as described in the second aspect is implemented.
The embodiment of the disclosure provides a data processing method, a data processing apparatus, a memory controller, an electronic device, a storage medium and a computer program product. The method includes: acquiring data to be transmitted, wherein the data to be transmitted includes first data and second data; generating, based on the data to be transmitted, a data block to be transmitted and an error correction data block corresponding to the data block to be transmitted, wherein the data block to be transmitted includes a first data block generated by the first data and a second data block generated by the second data, and one data block to be transmitted and one error correction data block corresponding to the one data block to be transmitted form one error correction data group; and a sum of a total number of symbols of the second data block and a total number of symbols of the error correction data block is adapted to data transmission amount of a data channel for transmitting redundant data, and a ratio of total the number of symbols of the second data block and the total number of symbols of the error correction data block is less than or equal to 1:3; interleaving the error correction data group to obtain a target data block, wherein the target data block includes a valid data region obtained by interleaving the first data and a redundant data region obtained by interleaving error correction data and the second data; and the redundant data region is transmitted based on the data channel of the redundant data, the redundant data region includes a plurality of rows of data, at least one row of data includes both the second data and the error correction data, and at least one row of data includes only the error correction data; and transmitting the target data block to a preset component based on a transmission rule of the target data block.

It can be seen that the data processing method provided by the embodiments of the present disclosure adapts a sum of a total number of symbols of the second data block and a total number of symbols of the error correction data block to data transmission amount of a data channel for transmitting redundant data, and in the data interleaving step, the error correction data and the second data are interleaved to obtain a redundant data region, and the redundant data region is transmitted based on the data channel of the redundant data, thereby realizing the simultaneous transmission of the error correction data and the second data in the data channel for transmitting the redundant data; furthermore, the ratio of the total number of symbols of the second data block and the total number of symbols of the error correction data block is made less than or equal to 1:3, and in the data interleaving step, in the redundant data region of the target data block obtained by interleaving, at least one row of data includes both the second data and the error correction data, and at least one row of data includes only the error correction data, so as to ensure the data amount of the error correction data, thereby transmitting more data on the premise of ensuring the error correction capability.

BRIEF DESCRIPTION OF DRAWINGS

In order to explain the technical solution in the embodiments of the present disclosure more clearly, the drawings needed in the description of the embodiments will be briefly introduced below. Obviously, the drawings in the following description are only the embodiments of the disclosure. For ordinary people skilled in the art, other drawings can be obtained according to the provided drawings without creative work.

FIG. 1 is a schematic diagram of a data structure;
FIG. 2 is another schematic diagram of another data structure;
FIG. 3 is an optional schematic flow diagram of a data processing method according to an embodiment of the present disclosure;
FIG. 4 is an optional schematic diagram of step S110 of FIG. 3 according to an embodiment of the present disclosure;
FIG. 5 is an optional schematic diagram of a data processing process according to an embodiment of the present disclosure;
FIG. 6 is an optional schematic diagram of data interleaving according to an embodiment of the present disclosure;
FIG. 7 is a schematic diagram of a data structure of a burst length according to an embodiment of the present disclosure;
FIG. 8 is an optional schematic diagram of a hardware module according to an embodiment of the present disclosure;
FIG. 9 is an optional schematic flow diagram of another data processing method according to an embodiment of the present disclosure;
FIG. 10 is an optional schematic diagram of another hardware module according to an embodiment of the present disclosure;
FIG. 11 is a reference schematic diagram of a data structure for transmission to an X4 memory chip in a burst length according to an embodiment of the present disclosure;
FIG. 12 is a reference schematic diagram of a data structure transmitted in a burst length under interleaving of encoded error correction data groups encoded by four-channel RS8 (20, 17) according to an embodiment of the present disclosure;
FIG. 13 is an optional block diagram of a data processing apparatus according to an embodiment of the present disclosure; and
FIG. 14 is an optional block diagram of another data processing apparatus according to an embodiment of the present disclosure.

DETAILED DESCRIPTION

In the following, the technical solution in the embodiments of the present disclosure will be clearly and completely described with reference to the attached drawings. Obviously, the described embodiments are only a part of the embodiments of the present disclosure, but not the whole embodiments. Based on the embodiments in present disclosure, all other embodiments obtained by ordinary people skilled in the art without creative work belong to the scope of protection in present disclosure.

As described in the background, in computer systems, the ECC (Error Correction Code) technology is a commonly used error correction technology for detecting and correcting errors by adding redundant error correction data to the data. However, the addition of redundancy inevitably increases the overall size of the data, resulting in a decrease in the amount of data that can actually be stored and transmitted, and the inability to store and transmit more data.

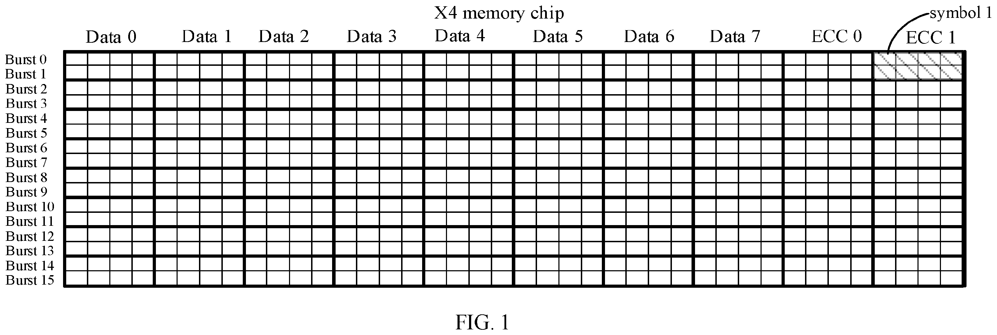

With reference to a schematic diagram of a data structure shown in FIG. 1, the structure corresponds to a data storage structure of an X4 memory chip (namely, each storage chip corresponds to four transmission channels). There are ten storage chips in this structure, including eight data chips such as Data 0, Data 1, Data 2, Data 3, Data 4, Data 5, Data 6 and Data 7, and two ECC chips such as ECC 0 and ECC 1. The data chip is a memory chip for storing valid data, and the ECC chip is a memory chip for storing error correction data. The ten storage chips correspond to a total of 40 transmission channels (i.e. 40-bit channel), supporting transmission or reception of 512-bit valid data and 128-bit error correction data in one burst length 16 transmission.

Burst length refers to the number of data units (also called "beats") that are transmitted continuously without changing the address. Burst length 16 is a continuous transmission of 16 data units without changing the address, such as Burst 0, Burst 1...Burst 15 in FIG. 1. Burst 0 is a first data unit of a burst transmission, Burst 1 is a second data unit of the burst transmission, and so on until Burst 15, i.e. the last data unit of the burst transmission.

In the process of data transmission/storage, data is encoded and interleaved for a minimum transmission unit/minimum storage unit of the data based on a symbol. In the data storage process, one symbol data should be stored in one storage chip. With regard to FIG. 1, taking the symbol as 8 bits as an example, in the process of data encoding and interleaving, one symbol data will be divided into two rows on average, with each row being 4 bits (in the figure, only the configuration mode of symbol 1 marked by diagonal lines in ECC 1 is used as an example, and in the region corresponding to each Data/ECC, one symbol data is configured every two rows), thereby forming a data structure as shown in FIG. 1, and transmitting/storing the data in the data structure to an X4 memory chip based on a corresponding transmission channel.

From the perspective of storage and error correction capability, in the data structure shown in FIG. 1, RS (Reed Solomon code) encoding is taken as an example (an encoding using 2t error correction symbols to correct t symbol errors, wherein t is a positive integer).

In an optional implementation, the corresponding data transmission channel may be viewed as a 40-bit width, wherein 8-bit is a bit width of ECC, and in RS encoding with 8 bits as a symbol, RS8 (10, 8) or RS16 (10, 8) encoding is applicable.

RS8 in RS8 (10, 8) represents that RS encoding uses 8-bit symbol, and numbers in (10, 8) represents the total number of symbols, wherein 10 represents a total number of symbols valid data symbol + ECC symbol) and 8 represents the total number of valid data symbols. Similarly, RS16 in RS16 (10, 8) represents that RS encoding uses 16-bit symbol (not shown in the figure), and the number in (10, 8) indicates a total number of symbols, wherein 10 represents a total number of symbols (valid data symbol + ECC symbol) and 8 represents a total number of valid data symbols.

That is, 4-bit data can be corrected by including 8-bit ECC at each beat. That is, even if one of the X4 storage chips in the structure shown in FIG. 1 completely fails, the data of this X4 storage chip can be completely calculated only by ECC to realize the chipkill.

However, in order to correct a 4-bit error per beat, 8-bit ECC must be required, without any spare bit to store additional data. That is, if 8-bit is used as the bit width of ECC in the data transmission channel of 40-bit width, then the error correction data occupies the entire ECC space (i.e. ECC 0 + ECC 1), and additional information such as data attribute, tag, etc. cannot be stored.

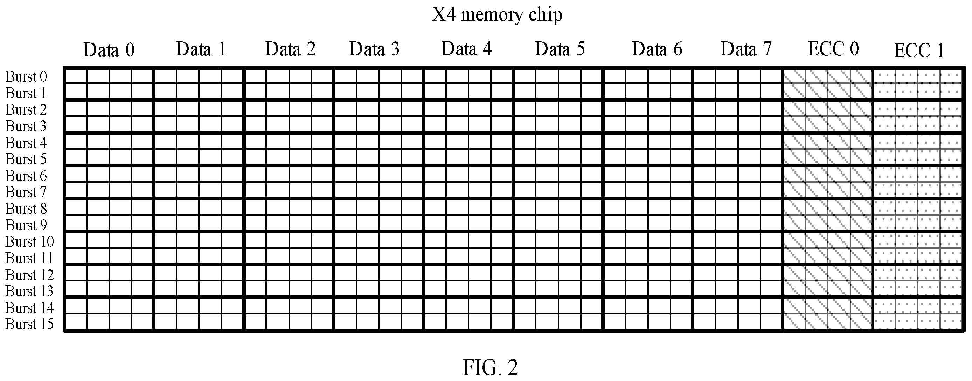

In another optional implementation, with reference to FIG. 2, the 4-bit width of the bit width of the 8-bit ECC may be taken to store additional information (as hatched by the diagonal lines in FIG. 2), with only the bit width of the remaining 4 bits used for error correction (as hatched by the dots in FIG. 2). However, for 4-bit ECC, it is unable to correct the error of 4 bits, and it is unable to achieve complete correction of single X4 memory chip. Although this data structure can store additional information, its error correction capability is reduced, which has a large impact on the stability of the system.

In RS encoding with 8 bits as a symbol, RS8 (20, 18) encoding is applicable. The specific meaning of RS8 (20, 18) can be explained with reference to RS8 (10, 8) or RS16 (10, 8) in the RS encoding described above, which is not repeated here.

It can be seen that 4 bits of the bit-width of the 8-bit ECC are used to store the additional information, and only the remaining 4 bits are used for error correction; although 64-bit other information (such as encryption information, identification information, etc.) can be additionally stored, this method is at the expense of error correction capability.

It can be understood that the foregoing two methods either use the data on two ECC chips to correct the error of one X4 storage chip and cannot store additional information, either use the data on one ECC chip to correct an error of half the X4 storage chip, sacrificing error correction capability to store additional information. That is, to use the ECC bit to simultaneously implement error correction and store additional information, a trade-off must be made between the two. If the ECC bits are all used for error correction, there is no space to store additional information. On the contrary, if some ECC bits are reserved for storing additional information, the error correction capability is reduced accordingly.

In view of the foregoing contents, the embodiment of the disclosure provides a data processing method, a data processing apparatus, a memory controller, an electronic device, a storage medium and a computer program product. The method includes: acquiring data to be transmitted, wherein the data to be transmitted includes first data and second data; generating, based on the data to be transmitted, a data block to be transmitted and an error correction data block corresponding to the data block to be transmitted, wherein the data block to be transmitted includes a first data block generated by the first data and a second data block generated by the second data, and one data block to be transmitted and one error correction data block corresponding to the one data block to be transmitted form one error correction data group; and a sum of a total number of symbols of the second data block and a total number of symbols of the error correction data block is adapted to data transmission amount of a data channel for transmitting redundant data, and a ratio of the total number of symbols of the second data block and the total number of symbols of the error correction data block is less than or equal to 1:3; interleaving the error correction data group to obtain a target data block, wherein the target data block includes a valid data region obtained by interleaving the first data and a redundant data region obtained by interleaving error correction data and the second data; and the redundant data region is transmitted based on the data channel of the redundant data, the redundant data region includes a plurality of rows of data, at least one row of data includes both the second data and the error correction data, and at least one row of data includes only the error correction data; and transmitting the target data block to a preset component based on a transmission rule of the target data block.

It can be seen that the data processing method provided by the embodiments of the present disclosure adapts a sum of a total number of symbols of the second data block and a total number of symbols of the error correction data block to data transmission amount of a data channel for transmitting redundant data, and in the data interleaving step, the error correction data and the second data are interleaved to obtain a redundant data region, and the redundant data region is transmitted based on the data channel of the redundant data, thereby realizing the simultaneous transmission of the error correction data and the second data in the data channel for transmitting the redundant data; furthermore, the ratio of the total number of symbols of the second data block and the total number of symbols of the error correction data block is made less than or equal to 1:3, and in the data interleaving step, in the redundant data region of the target data block obtained by interleaving, at least one row of data includes both the second data and the error correction data, and at least one row of data includes only the error correction data, so as to ensure the data amount of the error correction data, thereby transmitting more data on the premise of ensuring the error correction capability.

The details of the data processing solutions are further explained below for a better understanding of the solutions provided by embodiments of the present disclosure.

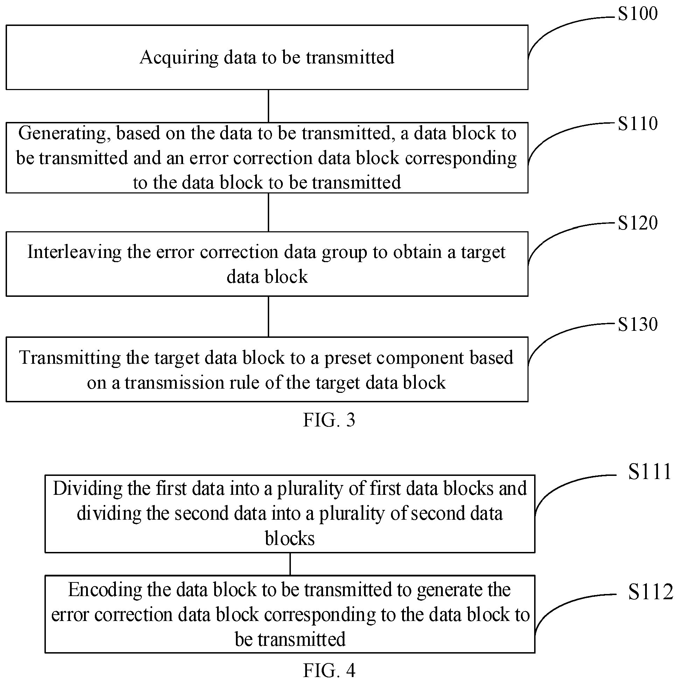

In an embodiment of the present disclosure, a data processing method is provided. Referring to an optional schematic flow diagram of a data processing method shown in FIG. 3, the method includes:

step S100: acquiring data to be transmitted.

The data to be transmitted may refer to data ready for transmission, and may also refer to data ready for storage. The data to be transmitted includes the first data and the second data. The first data may specifically be binary data, and a corresponding data amount may be determined based on a data transmission mechanism or a data storage mechanism of a hardware device. In an optional example, the data amount of the first data corresponds to the data amount of data that can be transmitted in a burst length of the hardware, such as 128 bits, 256 bits, 512 bits, etc. The second data may specifically be binary data, and the corresponding data amount may be determined based on a preset encoding method, the data amount of the first data, and the ratio of a total number of symbols of the second data block and a total number of symbols of the error correction data block. Taking the situation where the encoding mode is RS8 (20, 17), the data amount of the first data is 256 bits, and the ratio of the total number of symbols of the second data block and the total number of symbols of the error correction data block is equal to 1:3 as an example, in the situation where the encoding mode is RS8 (20, 17), the total number of symbols of the error correction data block is 3, then a corresponding number of symbol of the second data block is 1 (the data amount of the second data block is 8-bit), and the total number of symbols of the first data block is 16 (the data amount of the first data block is 128-bit).

The data amount of the second data needs to satisfy that a total number of second data blocks after subsequent division is equal to a total number of first data blocks after the division of the data amount of the first data. In the foregoing example, the 256-bit first data can be divided into four 128-bit first data blocks, and then the total number of corresponding second data blocks is also four. At this time, the data amount of the second data is 32-bit (i.e. four 8-bit second data blocks).

The first data is effective data, and the second data is valid data, or one or more selected from the group consisting of identification data, attribute data, check data, and encryption information corresponding to the valid data. The second data may be understood as additional data that can be transmitted or stored.

Step S110: generating, based on the data to be transmitted, a data block to be transmitted and an error correction data block corresponding to the data block to be transmitted.

The data block to be transmitted includes a first data block generated by the first data and a second data block generated by the second data, and one data block to be transmitted and one error correction data block corresponding to the one data block to be transmitted form one error correction data group. The first data block and the second data block are data blocks that meets the data bit required by a preset encoding mode, and are used as data parts to be transmitted in the error correction data group, so as to perform error correction on the data to be transmitted based on the error correction data in the error correction data group in a subsequent process.

In an optional implementation, with reference to FIG. 4, the step of generating, based on the data to be transmitted, a data block to be transmitted and an error correction data block corresponding to the data block to be transmitted may include:

Step S111: dividing the first data into a plurality of first data blocks and dividing the second data into a plurality of second data blocks.

One first data block and one second data block form one data block to be transmitted.

The dividing the first data into a plurality of first data blocks and dividing the second data into a plurality of second data blocks is specifically: dividing the first data into the plurality of first data blocks having a first pre-set number of bits, and dividing the second data into the plurality of second data blocks having a second pre-set number of bits. In the present step, the total number of the first data blocks and the total number of the second data blocks may be determined based on the data amount of the first data and the second data, and a preset mode. It should be noted that a total number of the first data blocks and a total number of the second data blocks are equal.

The error correction data block is an error correction data set used to correct erroneous data in the data to be transmitted based on the data block to be transmitted and the redundant data block obtained by a particular encoding algorithm.

In some optional examples, the particular encoding algorithm may be determined based on hardware configuration and system configuration, and the particular encoding algorithm is fixedly configured in hardware, for example the particular hardware may be configured as an encoding module to execute the particular encoding algorithm.

The error correction data block may be understood as an error correction data set corresponding to the data block to be transmitted. In the present step, a sum of a total number of symbols of the second data block and a total number of symbols of the error correction data block is adapted to data transmission amount of a data channel for transmitting redundant data, and a ratio of the total number of symbols of the second data block and the total number of symbols of the error correction data block is less than or equal to 1:3. For example, the ratio of the total number of symbols of the second data block and the total number of symbols of the error correction data block is 1:3.

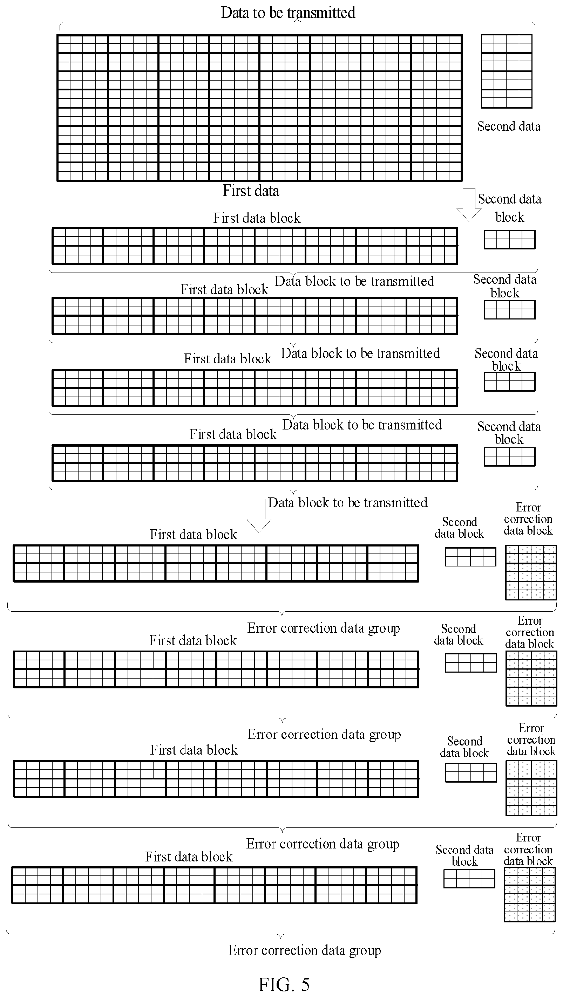

It can be understood that the total number of first data blocks and the second data blocks may be determined based on the data amount of the first data and the second data, and a preset encoding mode. In this example, with reference to an optional schematic diagram of a data processing process shown in FIG. 5, taking the case that the data to be transmitted includes 512-bit first data and 32-bit second data, the ratio of the total number of symbols of the second data block and the total number of symbols of the error correction data block is 1:3, and the encoding mode is RS8 (20, 17) as an example for illustration, the corresponding first data blocks and second data blocks have a total of 17 symbols. The first data block has 16 symbols with 128 bits in total; the second data block has 1 symbol with 8 bits in total; and the error correction data block has 3 symbols with 24 bits in total. The first data is divided into a plurality of first data blocks, and the second data is divided into a plurality of second data blocks. A total number of the first data blocks is equal to a total number of the second data blocks. That is, the 512-bit first data is divided into 4 first data blocks and the 32-bit second data is divided into 4 second data blocks. One first data block and one second data block form one data block to be transmitted.

With continued reference to FIG. 4, step S112 is performed as follows: encoding the data block to be transmitted to generate the error correction data block corresponding to the data block to be transmitted.

The error correction data block is redundant data obtained based on a particular algorithm on the basis of the data block to be transmitted. One data block to be transmitted and the error correction data block corresponding to the one data block to be transmitted form one error correction data group, so that error correction can be performed on the data to be transmitted based on the error correction data in the error correction data group.

Specifically, the total number of symbols of the error correction data block is n-k, and the total number of the corresponding data bits and information bits is (n-k)*m, so that m-bit data of t symbols in the data to be transmitted can be corrected, wherein $t = \dfrac{2(n-k)}{3}$ (wherein (n-k) is an integer multiple of 3).

It can be seen that the embodiments of the present disclosure break through the traditional RS encoding theory (namely, using 2t error correction symbols to correct the encoding of t symbol errors, with t being a positive integer), and achieves the correction of 2t symbol errors using 3t error correction symbols.

A total number of error correction data blocks is equal to a total number of the first data blocks or a total number of the second data blocks. In this example, with continuing reference to FIG. 5, taking the case that the data to be transmitted includes 512-bit first data and 32-bit second data, the ratio of the total number of symbols of the second data block and the total number of symbols of the error correction data block is 1:3, and the encoding mode is RS8 (20, 17) as an example for illustration, the corresponding first data blocks and second data blocks have a total of 17 symbols. The first data block has 16 symbols with 128 bits in total, and the second data block has 1 symbol with 8 bits in total. The corresponding error correction data block has 3 symbols with 24 bits in total. The 512-bit first data and the 32-bit second data are divided into four first data blocks and four second data blocks, and four error correction data blocks are correspondingly generated.

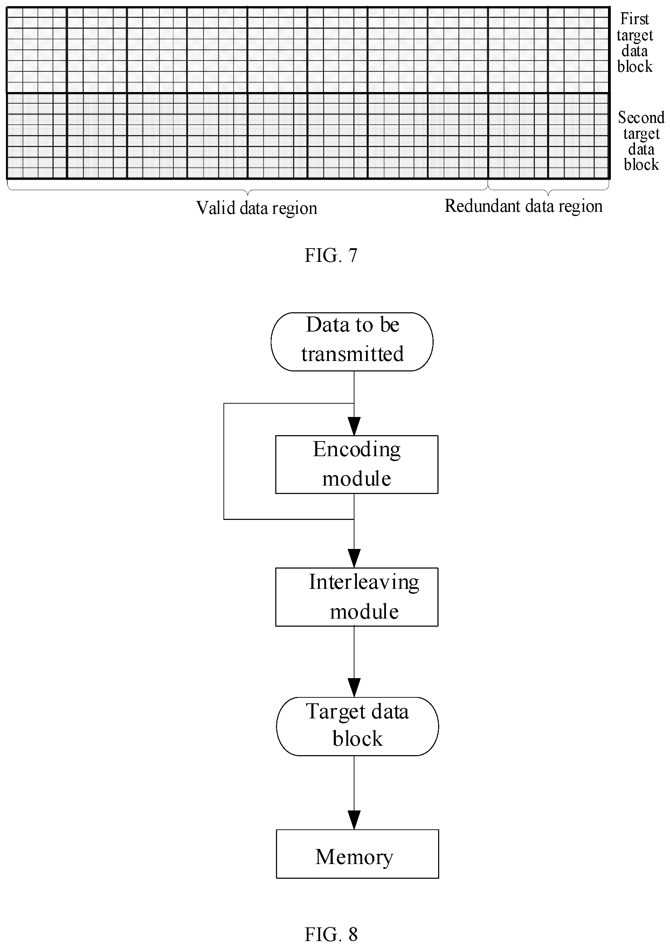

In a specific example, the encoding module may be configured in hardware, so that the error correction data blocks corresponding to the first data block and the second data block are calculated by using the encoding module. Referring to an optional schematic diagram of a hardware module according to an embodiment of the present disclosure shown in FIG. 8, an encoding module is set to generate error correction data (also referred to as an error correction code) based on data to be transmitted.

With continued reference to FIG. 3, step S120 is performed as follows: interleaving the error correction data group to obtain a target data block.

The target data block includes a valid data region obtained by interleaving the first data and a redundant data region obtained by interleaving error correction data and the second data; and the redundant data region is transmitted based on the data channel of the redundant data, the redundant data region includes a plurality of rows of data, at least one row of data includes both the second data and the error correction data, and at least one row of data includes only the error correction data. The redundant data region includes a plurality of columns of data, only the error correction data is arranged in at least one column of data, and the error correction data and the second data are alternately arranged in the at least one column of data.

To adapt to the hardware bit width, the error correction data group may be interleaved into the target data block conforming to the hardware bit width. One symbol is configured as 2 rows of data on average in the embodiment of the present disclosure. For example, if the data of a symbol in the first data is 01001010 (the symbol data is respectively a first bit, a second bit...an eighth bit from left to right), then the data appears to be arranged as two rows of data on average in a data block (for example, data of odd-numbered bits are arranged in a first row in sequence, and data of even-numbered bits are arranged in a second row in sequence; namely, the first row is 0011, and the second row is 1000).

The target data block may include one error correction data group or a plurality of error correction data groups, and the specific number is determined based on the number of bits of symbols in the error correction data group. With regard to an error correction data group encoded with RS8 (20, 17) and using 8-bit symbols, the target data block may be formed by interleaving two error correction data groups; and with regard to an error correction data group encoded RS16 (20, 17) and using 16-bit symbols, the target data block may be formed by interleaving one error correction data group.

It can be understood that, in the hardware transmission channels, some transmission channels are only used for transmitting the first data, some transmission channels are used for transmitting the second data and the error correction data (the error correction data and the second data are alternately arranged), and some transmission channels are only used for transmitting error correction data. The transmission channels only used for transmitting the first data are concentrated on one side to form a valid data region. The transmission channels used for transmitting the second data and the error correction data, and the transmission channel only used for transmitting the error correction data are concentrated on the other side to form a redundant data region. Accordingly, in a specific interleaving processing, the first data block is sequentially arranged on one side of the target data block based on the symbols to form a valid data region, and the second data block and the error correction data block are sequentially arranged on the other side of the target data block based on the symbols to form a redundant data region.

In a particular interleaving process, the target data block includes at least one error correction data group, and the data of the error correction data group may be arranged in sequence based on an order of the error correction data group. It should be noted that in the error correction data group, the first data block, and the second data block together with the error correction data block should be configured separately, namely, the data in the first data block is arranged on the side of the target data block for configuring the valid data region, and the data of the second data block and the error correction data block is arranged on the side of the target data block for configuring the redundant data region.

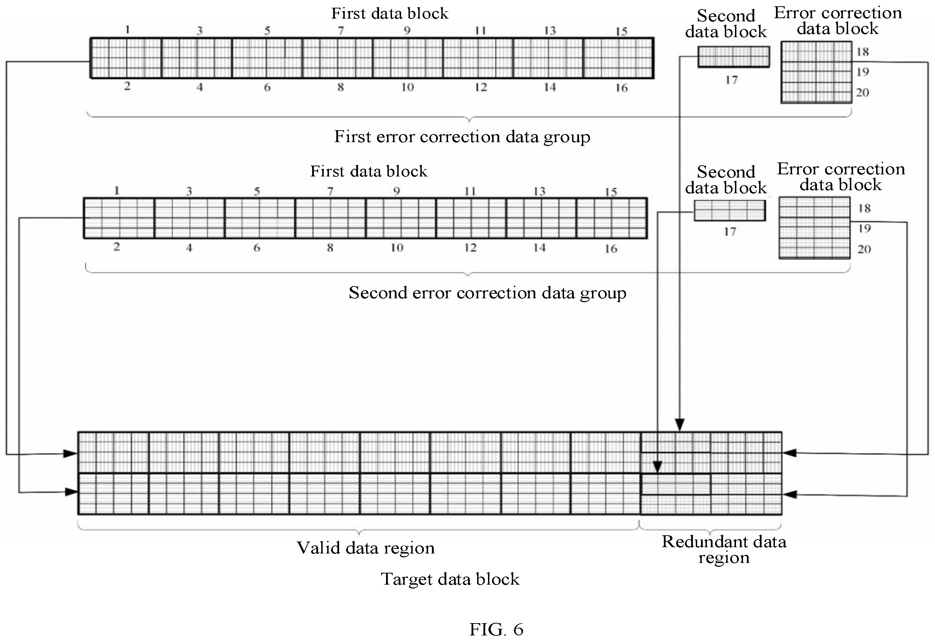

With reference to an optional schematic diagram of data interleaving shown in FIG. 6, for example, the target data block includes two error correction data groups, respectively a first error correction data group and a second error correction data group, and each error correction data group includes n symbols (taking n=20 as an example in the figure), the previous k-1 symbols are symbols in the first data block (taking k=17 as an example in the figure), one symbol from the k-th symbol to the n-th symbol is a symbol in the second data block (taking the k-th symbol as an example in the figure), and the symbols from the k-th symbol to the n-th symbol, excluding those belonging to the second data block, are symbol in the error correction data block, a first (1) symbol represents a first symbol in the first error correction data group, a first (2) symbol represents a second symbol in the first error correction data group, a first (n) symbol represents an n-th symbol in the first error correction data group, and so on, the second (n) symbol represents the n-th symbol in the second error correction data group, and n and k-1 are even numbers greater than 0.

The target data block(s) is arranged in sequence based on the order of the error correction data group(s), which means that the first data block of the error correction data group is sequentially arranged on the side for configuring the valid data region, and the second data block and the error correction data block of the error correction data group are sequentially arranged on the side for configuring the redundant data region. Specifically, with continued reference to FIG. 6, taking the case that the target data block includes two error correction data groups as an example, it is shown in the target data block as follows:

In the target data block, the data is sequentially arranged from top to bottom based on the order of the error correction data groups, and the first data block is sequentially arranged at the side for configuring the valid data region, and the second data block and the error correction data block are sequentially arranged at the side for configuring the redundant data region.

As shown in FIG. 6, at least one row of data at one side of the redundant data region includes both the second data and the error correction data (such as data of a first row, a second row, a fifth row and a sixth row arranged from top to bottom in FIG. 6), and at least one row of data includes only error correction data (such as data of a third row, a fourth row, a seventh row and an eighth row arranged from top to bottom in FIG. 6); only the error correction data (such as the data in the first to fourth columns arranged from right to left in FIG. 6) is arranged in at least one column of data, and the error correction data and the second data are alternately arranged in at least one column of data (such as the data in the fifth to eighth columns arranged from right to left in FIG. 6).

Referring to an optional schematic diagram of a hardware module according to an embodiment of the present disclosure shown in FIG. 8, an encoding module is set to generate error correction data based on data to be transmitted. The interleaving module is connected to the encoding module, and after the encoding module generates the error correction data block, the data to be transmitted (the first data and the second data) can be further interleaved with the error correction data so as to generate the target data block for transmission and storage to a memory.

The column data in the target data block is aligned based on a hardware transmission channel, and when there are a plurality of target data blocks, the plurality of target data blocks are aligned based on a column direction, so that the target data blocks are sequentially transmitted based on the hardware transmission channel.

With continued reference to FIG. 3, step S130 is performed as follows: transmitting the target data block to a preset component based on a transmission rule of the target data block.

The data to be transmitted may refer to data ready for transmission, and may also refer to data ready for storage. Accordingly, the target data block obtained after processing the data to be transmitted may be used for transmission to a preset position (such as a receiving end of data), or for transmission to a memory and storage.

The transmission rule of the target data block may include a corresponding relationship between each column of data and a hardware port, so that each column of data is transmitted based on different hardware ports. Further, the transmission rule may further include the total number of target data blocks transmitted in a burst length. For example, when one burst length corresponds to the data amount of a plurality of target data blocks, data of the plurality of target data blocks is sequentially transmitted corresponding to a burst length. Referring to FIG. 7, the total number of target data blocks transmitted a burst length may be two, and when a burst length corresponds to the data amount of two target data blocks, data of the two target data blocks are sequentially transmitted corresponding to a burst length.

It should be noted that the target data block obtained after processing the data to be transmitted needs data decoding and error correction after being transmitted to the receiving end of the data, so as to determine whether the data transmission process is erroneous and correct the erroneous data, while the target data block obtained after processing data to be saved is saved after being transmitted to the memory, and data decoding and error correction are needed when reading is performed, so as to determine whether the saved data is erroneous and correct the erroneous data.

It can be seen that the data processing method provided by the embodiments of the present disclosure adapts a sum of a total number of symbols of the second data block and a total number of symbols of the error correction data block to data transmission amount of a data channel for transmitting redundant data, and in the data interleaving step, the error correction data and the second data are interleaved to obtain a redundant data region, and the redundant data region is transmitted based on the data channel of the redundant data, thereby realizing the simultaneous transmission of the error correction data and the second data in the data channel for transmitting the redundant data; furthermore, the ratio of the total number of symbols of the second data block and the total number of symbols of the error correction data block is made less than or equal to 1:3, and in the data interleaving step, in the redundant data region of the target data block obtained by interleaving, at least one row of data includes both the second data and the error correction data, and at least one row of data includes only the error correction data, so as to ensure the data amount of the error correction data, thereby transmitting more data on the premise of ensuring the error correction capability.

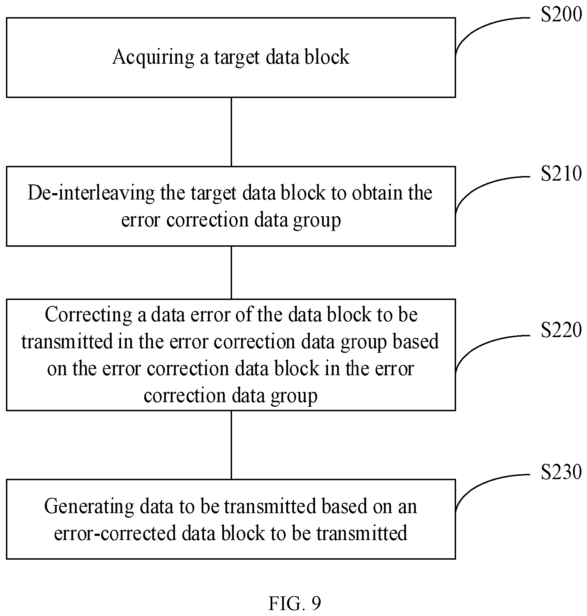

In a further example, an embodiment of the present disclosure also provides a data processing method for error correction of the data to be transmitted based on error correction data in a target data block. Specifically, referring to an optional schematic process diagram of a data processing method shown in FIG. 9, the data processing method includes: step S200: acquiring a target data block.

The target data block is data received by a preset component or acquired from the preset component after being encoded and interleaved and transmitted to the preset component. For example, the target data block may be data received by the receiving end, and may also be data read from a memory and stored in the memory.

The target data block is obtained by interleaving based on an error correction data group, for example, the target data block obtained by interleaving with the method described in the preceding embodiment; the error correction data group includes a data block to be transmitted and an error correction data block corresponding to the data block to be transmitted, and the data block to be transmitted includes a first data block generated by first data and a second data block generated by second data; the target data block includes a valid data region obtained by interleaving the first data and a redundant data region obtained by interleaving error correction data and the second data; and the redundant data region is transmitted based on a data channel of redundant data, the redundant data region includes a plurality of rows of data, at least one row of data includes both the second data and the error correction data, and at least one row of data includes only the error correction data; and the redundant data region includes a plurality of columns of data, only the error correction data is arranged in at least one column of data, and the error correction data and the second data are alternately arranged in at least one column of data.

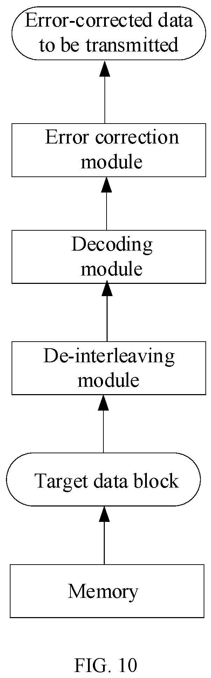

In the process of acquiring the target data block, the acquisition can be performed based on a transmission rule of a hardware. The transmission rule may include acquiring each column of data of the data block from different hardware ports based on a corresponding relationship between each column of data and the hardware port. In particular, different data in the target data block is transmitted based on different transmission channels, namely, in the hardware transmission channels, some transmission channels are only used for transmitting the first data, some transmission channels are used for transmitting the error correction data and the second data (the error correction data and the second data are arranged alternately), and some transmission channels are only used for transmitting the error correction data. Accordingly, in a specific acquisition process, data acquired from the transmission channel that only transmits the first data is the data in the first data block, data acquired from the transmission channel that transmits the error correction data and the second data is the data in the error correction data block and the data in the second data block, and data acquired from the transmission channel that only transmits the error correction data is the data in the error correction data block. Referring to an optional schematic structural diagram of another hardware module shown in FIG. 10, taking reading data from a memory as an example, during reading, the first data, the second data, and the error correction data can be distinguished based on a transmission channel of the data.

Further, the transmission rule may further include: acquiring a corresponding number of target data block based on the total number of target data blocks transmitted in a burst length. For example, when one burst length corresponds to a plurality (e.g. 2) of target data blocks, data of the plurality (e.g. 2) of target data blocks is sequentially transmitted corresponding to one burst length.

On the basis of that the column data in the target data block is aligned based on the hardware transmission channel, when there are a plurality of target data blocks, the plurality of target data blocks are aligned based on a column direction, so that the target data blocks can be acquired in turn based on a data transmission order in the hardware transmission channel.

It should be noted that when there are a plurality of target data blocks corresponding to data of a burst length (namely, the total number of target data blocks transmitted in one burst length is multiple), and storage chip data transmitted within one corresponding burst length corresponds to symbols of a plurality of target data blocks, the processing process corresponding to this step may include: acquiring data in a burst length; and dividing the data in the burst length into a plurality of target data blocks based on a symbol length of the target data block, thereby obtaining the plurality of target data blocks.

With continued reference to FIG. 9, step S210 is performed: de-interleaving the target data block to obtain the error correction data group.

The error correction data group includes a data block to be transmitted and an error correction data block corresponding the data block to be transmitted, and the data block to be transmitted includes a first data block generated by first data and a second data block generated by second data. The first data block and the second data block are data blocks which are obtained by dividing the data to be transmitted and meet the data bit required by a preset encoding mode, and the error correction data block is a redundant data block obtained based on a particular encoding algorithm on the basis of data in the data block to be transmitted.

In a specific de-interleaving process, the target data block includes at least one error correction data group, and this step may determine symbol data belonging to a same error correction data group and an arrangement order corresponding to the symbol data based on a preset data arrangement order (for example, a reverse order of the data arrangement order in the interleaving process).

Specifically, when data of the error correction data group in the target data block is arranged in sequence based on an order of the error correction data group, the first data block and/or the second data block and/or the error correction data block in the error correction data group may be sequentially extracted.

The arrangement manner of the first data block, the second data block and the error correction data block in the target data block is described in detail in the above-mentioned description, and based on the arrangement manner, the symbol arrangement manner belonging to one same error correction data group in the target data block can be determined, so that de-interleaving of the target data block can be performed based on the symbol arrangement manner.

With continued reference to FIG. 9, step S220 is performed: correcting a data error of the data block to be transmitted in the error correction data group based on the error correction data block in the error correction data group.

The error correction data block is a redundant data block obtained based on a particular encoding algorithm on the basis of the data in the data block to be transmitted. Accordingly, error correction may be performed on the data block to be transmitted based on a particular decoding algorithm.

It can be understood that the particular encoding algorithm may perform error correction of the data block to be transmitted based on the corresponding particular decoding algorithm. In the hardware, on the premise that the particular encoding algorithm is determined, the corresponding particular decoding algorithm is also determined. Accordingly, the particular decoding algorithm may be fixedly configured in the hardware. For example, specific hardware may be configured as a decoding module to execute the particular decoding algorithm. Referring to FIG. 10, a decoding module configured to decode data may be connected to a de-interleaving module to decode de-interleaved data.

Specifically, correcting a data error of the data block to be transmitted in the error correction data group in the present step may include the following process: calculating a position of erroneous data in the data block to be transmitted based on the error correction data block in the error correction data group; and correcting a data error at a position where the data block to be transmitted has erroneous data.

It can be understood that the position of the erroneous data in the data block to be transmitted can be determined by calculating the first data in the first data block, the second data in the second data block and the error correction data in the error correction data block based on a particular decoding algorithm; and, in binary data, the data is "0" or "1", and therefore, after determining the position of the erroneous data in the data block to be transmitted, the data at this position may be corrected by converting the erroneous data, for example, the data is converted to "1" when the erroneous data is "0", or the data is converted to "0" when the erroneous data is "1".

In an optional implementation, the method of calculating the position of the erroneous data in the data block to be transmitted may be, for example, determining an error position and an error value of the error by using syndrome data.

Taking the encoding mode RS8 (20, 17) as an example, the corresponding data block to be transmitted has a total of 17 symbols. The first data block has 16 symbols with 128 bits in total; and the second data block has 1 symbol with 8 bits in total. The corresponding error correction data block has 3 symbols with 24 bits in total. The specific implementation of determining the error location and the error value of the error by using syndrome data may be as follows:

(1) the syndrome is calculated; and the syndrome data is $(s_0, s_1, s_2)$, wherein

$$s_0 = 2^0 e_i + 2^0 e_j, \ \ s_1 = 2^i e_i + 2^{i+1} e_j, \ \ s_2 = 2^{2i} e_i + 2^{2(i+1)} e_j,$$

wherein $e_i$ is an error value at an error position of i and $e_j$ is an error value at an error position of i+1.

(2) The syndrome data is used to construct a polynomial equation of multiple degrees. For example, a quadratic equation can be constructed, $ax^2 + bx + c = 0$, wherein $a=2s_0$, $b= 3s_1$, and $c=s_2$. Thus, the error position and the error value can be solved based on the polynomial equation of multiple degrees.

In some embodiments, the polynomial equation of multiple degrees may be a quadratic equation. In other embodiments, the syndrome data may be utilized to construct other equations (e.g. cubic equations, etc.) or combinations of different types of equations (e.g. combination of quadratic and cubic equations, etc.). In addition, the error position and error value may be solved by a method other than the equations (e.g. look-up tables, etc.) by using the syndrome data.

According to the quadratic equation constructed above, $ax^2 + bx + c = 0$, wherein $a= 2s_0$, $b=3_{s_1}$, and $c=s_2$. Two solutions $x_0$ and $x_1$ of $x$ can be solved by solving a quadratic equation over a finite field, wherein the finite field, also called Galois Field, is a field containing only a finite number of elements, e.g. it can be written as GF($2^n$), and n represents the number of bits of an element in the field.

(3) The two solutions $x_0$ and $x_1$ of the quadratic equation are obtained, and a valid solution and the error position are determined. According to $x = 2^i$, the value $i$ is obtained, and if $i$ is even and $i < 20$, then the valid solution is $x$, and the error positions are $i$ and $i+1$. When $x_0$ is the valid solution, the error positions are $i_0$ and $i_0 + 1$, and when $x_1$ is the valid solution, the error positions are $i_1$ and $i_1 + 1$.

It can be understood that when determining whether the two solutions $x_0$ and $x_1$ of the quadratic equation are valid solutions, it is necessary to bring the two solutions $x_0$ and $x_1$ of the quadratic equation into $x = 2^i$ to solve a corresponding value of $i$, and only when $i$ is even and $i < 20$, the corresponding $x$ is the valid solution, and then $i$ and $i+1$ can be determined as the error positions. For example, when it is determined whether $x_0$ is the valid solution, $x_0$ needs to be brought in $x = 2^i$ to

obtain $i_0$, and only when $i_0$ is even and $i_0 < 20$, $x_0$ is the valid solution, and it is possible to determine that the error positions are $i_0$ and $i_0 + 1$. By the same reasoning, when it is determined whether $x_1$ is the valid solution, $x_1$ needs to be brought in $x = 2^i$ to obtain $i_1$, and only when $i_1$ is an even number and $i_1 < 20$, $x_1$ is the valid solution, and it can be determined that the error positions are $i_1$ and $i_1 + 1$.

(4) The error value can be solved according to the number of the efficient solutions. The number of the valid solutions is different, and the corresponding process of solving the error value is also different. Therefore, the valid solutions are divided according to the number, and can be divided into the following three situations:

situation 1: the number of the valid solution is zero;
situation 2: the number of the valid solution is one; and
situation 3: the number of valid solutions is two.

The following provides a detailed explanation of solving for the error values under the three situations of situation 1, situation 2 and situation 3.

For situation 1, if the number of the valid solution is zero ($x_0$ and $x_1$ are not valid solutions), it indicates that the error that occurred is an uncorrectable error, and the error correction process is ended.

For situation 2, if the number of the valid solution is one ($x_0$ is the valid solution, or $x_1$ is the valid solution), the error values $e_i$ and $e_j$ are calculated according to the valid solutions and the syndrome data, wherein: $e_i = \dfrac{xs_0 + s_1}{3x}$, $e_j = e_i + s_0$, wherein, when $x_0$ is the valid solution, $x$ in the $e_i = \dfrac{xs_0 + s_1}{3x}$ is $x_0$, and when $x_1$ is the valid solution, $x$ in the $e_i = \dfrac{xs_0 + s_1}{3x}$ is $x_1$.

In an optional implementation, the manner for correcting a data error at an erroneous data position in the data block to be transmitted may be: performing an XOR operation on the data at the position of $i$ and $e_i$, and performing an XOR operation on the data at the position of $i+1$ and $e_j$, to obtain the error corrected data, wherein $i$ and $i+1$ are the error positions.

When $x_0$ is the valid solution, the error positions are $i_0$ and $i_0 + 1$, and when $x_1$ is the valid solution, the error positions are $i_1$ and $i_1 + 1$.

For situation 3, if the number of the valid solutions is two ($x_0$ and $x_1$ are valid solutions), it is further determined whether the second data contains a parity bit, and according to whether the second data contains a parity bit, the following two situations are provided:

In situation 3.1, the number of the valid solutions is two (both $x_0$ and $x_1$ are valid solutions), the second data contains the parity bit, and then the error values $e_{i_0}$, $e_{j_0}$, $e_{i_1}$ and $e_{j_1}$ are obtained by calculation according to the valid solutions and the syndrome data, wherein:

$$e_{i_0} = \frac{x_0 s_0 + s_1}{3x_0}, \quad e_{j_0} = e_{i_0} + s_0, \quad e_{i_1} = \frac{x_1 s_0 + s_1}{3x_1}, \quad e_{j_1} = e_{i_1} + s_0;$$

In an optional implementation, the manner for correcting a data error at an erroneous data position in the data block to be transmitted may be: performing an XOR operation on the data at the position of $i_0$ and $e_{i_0}$, and performing an XOR operation on the data at the position of $i_0 + 1$ and $e_{j_0}$, to obtain a first data group; performing an XOR operation on the data at the position of $i_1$ and $e_{i_1}$, and performing an XOR operation on the data at the position of $i_1 + 1$ and $e_{j_1}$, to obtain a second data group; bringing the first data group and the second data group into a parity bit operation; if only one of the calculated values of the first data group and the second data group is equal to the parity bit, then taking that data group as the error-corrected data; and if neither the first data group nor the second data group is equal to the parity bit after the operation, or both the first data group and the second data group are equal to the parity bit after the operation, indicating that the error occurred is an uncorrectable error, and ending the error correction process. When $x_0$ is the valid solution, the error positions are $i_0$ and $i_0 + 1$, and when $x_1$ is the valid solution, the error positions are $i_1$ and $i_1 + 1$.

It should be noted that the first data group and the second data group are brought into a parity bit operation, and it can be understood that the parity bit in the second data is obtained by some calculation mode (such as parity check), and the calculation mode can be performed on the first data group and the second data group.

In situation 3.2, if the number of the valid solutions is two ($x_0$ and $x_1$ are valid solutions), and there is no parity bit in the second data, it indicates that the error occurred is an uncorrectable error, and the error correction process is ended.

The above-mentioned method of calculating the position of erroneous data in the data block to be transmitted is only an optional example and may be solved in other ways, and the present disclosure is not limited to this.

In the hardware, an error correction module may be fixedly configured in the hardware to perform error correction on the data to be transmitted. Referring to FIG. 10, an error correction module connected to the decoding module is configured so that errors in data can be corrected by the error correction module.

With continued reference to FIG. 9, step S230 is performed: generating data to be transmitted based on an error-corrected data block to be transmitted.

The data to be transmitted can be understood as data waiting to be transmitted in a data transmission process, or the data to be saved before being stored in a memory in a process of storing data into the memory. In a specific example, when the data to be transmitted includes a plurality of first data blocks and second data blocks, the first data blocks and the second data blocks can be combined based on a preset rule to generate the data to be transmitted, so that the data to be transmitted can be transmitted to a target component, for example, to a CPU (central processing unit), etc.

In the following, the data processing method and its corresponding effects in the context of data stored into a memory according to the embodiments of the present disclosure will be further explained based on a specific example.

The interleaving of the error correction data group in the present example may be two paths of RS8 (20, 17) encoded error correction data group interleaving or one path of RS16 (20, 17) encoded error correction data group interleaving. Regardless of the interleaving mode, the error correction of the whole storage chip can be realized, and the chipkill can be realized. The erroneous symbol data may be located in a same storage chip or in different storage chips.

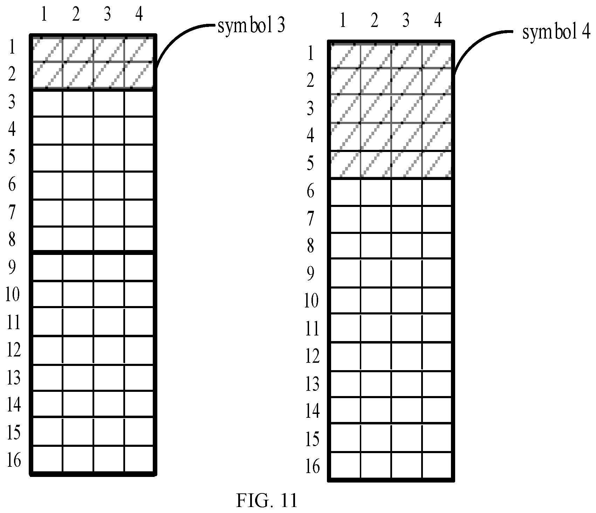

The number of symbol bits corresponding to the interleaving mode in the present example can be 8 bits, 16 bits, etc. and, referring to a schematic diagram of a data structure shown in FIG. 11 for transmission to an X4 memory chip in a burst length, the symbol data from left to right corresponds to 8 bits and 16 bits respectively. The burst length may be 8 bits, 16 bits, etc. and the figure illustrates 16 bits as an example. When the symbol data is 8 bits, with reference to the shaded area shown by symbol 3 in FIG. 11, one symbol is configured as 2 rows of data on average (namely, being arranged in a row direction). When the symbol data is 16 bits, with reference to the shaded area shown by symbol 4 in FIG. 11, a symbol is configured as 4 rows of data on average (namely, being arranged in the row direction).

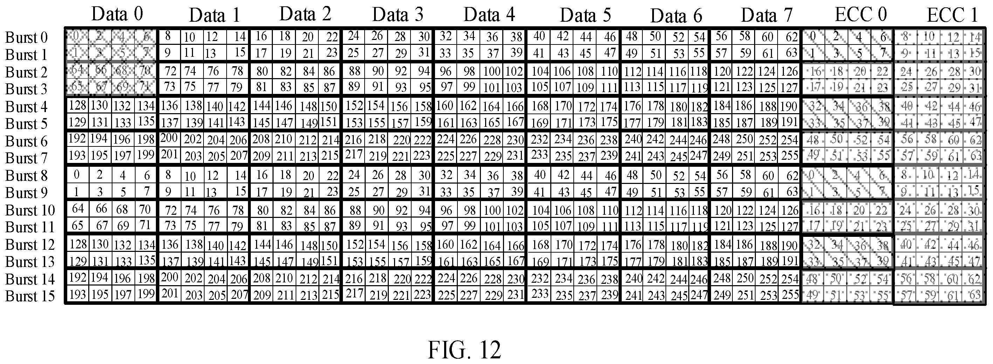

Taking the number of symbol bits as 8 bits, and the first data in the data to be transmitted as 512 bits as an example, FIG. 12 shows a data structure reference diagram of a data structure transmitted in a burst length under interleaving of encoded error correction data groups encoded by four-channel RS8 (20, 17), wherein bursts 0-7 are taken as first eight beats, corresponding to transmission of one target data block, and bursts 8-15 is taken as last eight beats, corresponding to transmission of another target data block.

It can be seen that the 8-bit data corresponding to two adjacent beats of one storage chip is one 8-bit symbol, and there are two error correction data groups interleaved in the first eight beats. In the target data block, the left-side 32 columns are used for configuring the first data, and the right-side 8 columns are used for configuring the second data and the error correction data. Correspondingly, 0-7 (such as Data 0, Data 1, Data 2, Data 3, Data 4, Data 5, data 6 and Data 7 in the figure) of the X4 memory chip in a specific storage chip are used as storage positions corresponding to the first data of the target data block, and 8-9 (such as ECC 0 and ECC 1 in the figure) of the X4 memory chip are used as storage positions corresponding to the second data and error correction data of the target data block.

With continuing reference to FIG. 12, 0-127 of the first data in the target data block is taken as one first data block, 0-7 of the error correction data is taken as one second data block, and 8-31 of the error correction data is taken as the error correction data block corresponding to the first data block and the second data block. The first data block, the second data block and the error correction data block can form an error correction data group 0; and 128-255 of the first data is taken as one first data block, 32-39 of the error correction data is taken as one second data block, and 40-63 of the error correction data is taken as the error correction data block corresponding to the first data block and the second data block. The first data block, the second data block and the error correction data block may be served as an error correction data group 1.

In the target data block, each error correction data group uses RS8 (20, 17) error correction code, which can correct any two adjacent 8-bit symbols, that is, errors occurring in any storage chip can be corrected by using the RS8 (20, 17) error correction code.

Specifically, taking 0-7 and 64-71 errors in the first data (that is, a total of two 8-bit symbol errors as shown in the grid shaded portion of the figure) as an example, 0-7 and 64-71 in the original data all belong to the error correction data group 0, any two adjacent 8-bit symbols can be corrected based on one error correction data group, and the above-mentioned erroneous data can all be corrected.

It can be understood that data mapping and error correction capabilities of the target data blocks corresponding to the first eight beats and the last eight beats are completely consistent. Therefore, the solution provided in the embodiments of the present disclosure can correct all errors of any storage chip to achieve chipkill.

It can be seen that the data processing method provided by the embodiments of the present disclosure adapts a sum of a total number of symbols of the second data block and a total number of symbols of the error correction data block to data transmission amount of a data channel for transmitting redundant data, and in the data interleaving step, the error correction data and the second data are interleaved to obtain a redundant data region, and the redundant data region is transmitted based on the data channel of the redundant data, thereby realizing the simultaneous transmission of the error correction data and the second data in the data channel for transmitting the redundant data; furthermore, the ratio of the total number of symbols of the second data block and the total number of symbols of the error correction data block is made less than or equal to 1:3, and in the data interleaving step, in the redundant data region of the target data block obtained by interleaving, at least one row of data includes both the second data and the error correction data, and at least one row of data includes only the error correction data, so as to ensure the data amount of the error correction data, thereby transmitting more data on the premise of ensuring the error correction capability.

In the following, a data processing apparatus according to an embodiment of the present disclosure is introduced, and the data processing apparatus described below can be regarded as a software functional module or a hardware functional module which are required to implement the data processing method according to the embodiment of the present disclosure. The contents of the data processing apparatus described below may be referenced together with respect to the method contents and hardware module contents described above.

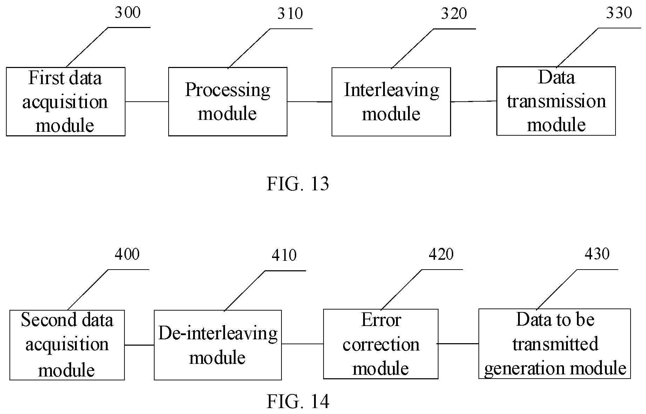

In an optional implementation, FIG. 13 illustrates an optional block diagram of a data processing apparatus according to an embodiment of the present disclosure for implementing a data processing method with data interleaving. As shown in FIG. 13, the data processing apparatus may include:

a first data acquisition module 300, configured to acquire data to be transmitted, wherein the data to be transmitted includes first data and second data;

a processing module 310, configured to generate a data block to be transmitted and an error correction data block corresponding to the data block to be transmitted based on the data to be transmitted, wherein the data block to be transmitted includes a first data block generated by the first data and a second data block generated by the second data, and one data block to be transmitted and one error correction data block corresponding to the one data block to be transmitted form one error correction data group; and a sum of a total number of symbols of the second data block and a total number of symbols of the error correction data block is adapted to data transmission amount of a data channel for transmitting redundant data, and a ratio of the total number of symbols of the second data block and the total number of symbols of the error correction data block is less than or equal to 1:3;

an interleaving module 320, configured to interleave the error correction data group to obtain a target data block, wherein the target data block includes a valid data region obtained by interleaving the first data and a redundant data region obtained by interleaving error correction data and the second data; and the redundant data region is transmitted based on the data channel of the redundant data, the redundant data region includes a plurality of rows of data, at least one row of data includes both the second data and the error correction data, and at least one row of data includes only the error correction data; and

a data transmission module 330, configured to transmit the target data block to a preset component based on a transmission rule of the target data block.

Optionally, the redundant data region includes a plurality of columns of data, only the error correction data is arranged in at least one column of data, and the error correction data and the second data are alternately arranged in at least one column of data.

Optionally, the processing module 310 is configured to generate a data block to be transmitted and an error correction data block corresponding to the data block to be transmitted based on the data to be transmitted, which may include:

dividing the first data into a plurality of first data blocks and dividing the second data into a plurality of second data blocks, wherein one first data block and one second data block form one data block to be transmitted, and a total number of the first data blocks is equal to a total number of the second data blocks; and

encoding the data block to be transmitted to generate the error correction data block corresponding to the data block to be transmitted.

Optionally, the dividing the first data into a plurality of first data blocks and dividing the second data into a plurality of second data blocks specifically includes: dividing the first data into the plurality of first data blocks having a first preset number of bits, and dividing the second data into the plurality of second data blocks having a second preset number of bits.

Optionally, the target data block includes at least one error correction data group, and the interleaving module 320 is configured to interleave the error correction data group to obtain a target data block, which specifically includes: arranging data of the error correction data group in sequence based on an order of the error correction data group.

Optionally, the target data block includes two error correction data groups, respectively referred to a first error correction data group and a second error correction data group, and each error correction data group includes n symbols, with previous k-1 symbols being symbols in the first data block, one symbol from the k-th symbol to the n-th symbol being a symbol in the second data block, and a symbol, except the symbol in the second data block, from the k-th symbol to the n-th symbol being a symbol in the error correction data block; and

an n-th symbol in the first error correction data group is represented by a first n-symbol, an n-th symbol in the second error correction data group is represented by a second n-symbol, wherein n and k-1 are even numbers greater than 0.

Optionally, the first data is valid data, and the second data is valid data, or one or more selected from the group consisting of identification data, attribute data, check data, and encryption information corresponding to the valid data.

Optionally, a burst length corresponds to data amount of a plurality of target data blocks; and data transmission module 330 is configured to transmit the target data block to a preset component based on a transmission rule of the target data block, which specifically includes: transmitting data of the plurality of target data blocks in sequence in a burst length.

In an optional implementation, FIG. 14 illustrates another optional block diagram of a data processing apparatus according to an embodiment of the present disclosure for implementing a data processing method with data de-interleaving. As shown in FIG. 14, the data processing apparatus may include:

a second data acquisition module 400, configured to acquire a target data block, wherein the target data block is obtained by interleaving based on an error correction data group, the error correction data group includes a data block to be transmitted and an error correction data block corresponding to the data block to be transmitted, and the data block to be transmitted includes a first data block generated by first data and a second data block generated by second data; the target data block includes a valid data region obtained by interleaving the first data and a redundant data region obtained by interleaving error correction data and the second data; and the redundant data region is transmitted based on a data channel of redundant data, the redundant data region includes a plurality of rows of data, at least one row of data includes both the second data and the error correction data, and at least one row of data includes only the error correction data;

a de-interleaving module 410, configured to de-interleave the target data block to obtain the error correction data group;

an error correction module 420, configured to correct a data error of the data block to be transmitted in the error correction data group based on the error correction data block in the error correction data group; and

a data to be transmitted generation module 430, configured to generate data to be transmitted based on an error-corrected data block to be transmitted.

Optionally, the redundant data region includes a plurality of columns of data, only the error correction data is arranged in at least one column of data, and the error correction data and the second data are alternately arranged in at least one column of data.

Optionally, the second data acquisition module 400 is configured to acquire a target data block, which specifically includes: acquiring the target data block based on a transmission rule of a hardware; and

the transmission rule includes:

acquiring each column of data of the target data block from different hardware ports, based on a corresponding relationship between each column of data and the hardware ports; and

acquiring a corresponding number of target data block, based on a total number of target data block transmitted in a burst length.

Optionally, the second data acquisition module 400 is configured to acquire a target data block, which includes:

acquiring data in a burst length; and

dividing the data in the burst length into a plurality of target data blocks based on a symbol length of the target data block.

Optionally, the target data block includes at least one error correction data group, and the de-interleaving module 410 is configured to de-interleave the target data block to obtain the error correction data group, which specifically includes: determining symbol data belonging to a same error correction data group and an arrangement order corresponding to the symbol data based on a preset data arrangement order.

Optionally, the determining symbol data belonging to a same error correction data group and an arrangement order corresponding to the symbol data based on a preset data arrangement order includes:

sequentially extracting the first data block and/or the second data block and/or the error correction data block in the error correction data group when data of the error correction data group in the target data block is arranged in sequence based on an order of the error correction data group.

Optionally, the error correction module 420 is configured to correct a data error of the data block to be transmitted in the error correction data group based on the error correction data block in the error correction data group, which includes:

calculating a position of erroneous data in the data block to be transmitted based on the error correction data block in the error correction data group; and

correcting a data error at the position where the data block to be transmitted has erroneous data.

Optionally, the data to be transmitted generation module 430 is configured to generate data to be transmitted based on an error-corrected data block to be transmitted, which specifically includes: combining the first data block and the second data block based on a preset rule to generate the data to be transmitted, wherein a total number of the first data block is equal to a total number of the second data block.

The first data is valid data, and the second data is valid data, or one or more selected from the group consisting of identification data, attribute data, check data, and encryption information corresponding to the valid data.

An embodiment of the present disclosure also provides a memory controller, and the memory controller may be configured with the data processing apparatus with an interleaving module as provided by the embodiment described above, and/or the memory controller may be configured with the data processing apparatus with a de-interleaving module as provided by the embodiment described above.

An embodiment of the present disclosure also provides an electronic device, which may include the memory controller as described above.

An embodiment of the present disclosure also provides a storage medium, and the storage medium stores one or more computer executable instructions; and when the one or more computer executable instructions are executed, the data processing method with interleaving processing in the embodiment of the present disclosure is implemented, and/or the data processing method with de-interleaving processing in the embodiment of the present disclosure is implemented.

An embodiment of the present disclosure also provides a computer program product, and the computer program product may include one or more computer-executable instructions; and the one or more computer executable instructions are executed, the data processing method with interleaving processing in the embodiment of the present disclosure is implemented, and/or the data processing method with de-interleaving processing in the embodiment of the present disclosure is implemented.

The above describes several implementations provided by embodiments of the present disclosure, various alternatives presented by the various implementations may be combined and cross-referenced with one another without conflict, thereby leading to many possible implementations that may be considered as implementations disclosed and published by the embodiments of the present disclosure.

Although the embodiments of the present disclosure are disclosed above, the present disclosure is not limited thereto. Any person skilled in the art may make various changes and modifications without departing from the spirit and scope of the present disclosure, and it is intended that the scope of protection of the present disclosure be defined by the claims.

**Claims**

1. A data processing method, comprising:

   acquiring data to be transmitted, wherein the data to be transmitted comprises first data and second data;
   generating, based on the data to be transmitted, a data block to be transmitted and an error correction data block corresponding to the data block to be transmitted, wherein the data block to be transmitted comprises a first data block generated by the first data and a second data block generated by the second data, and one data block to be transmitted and one error correction data block corresponding to the one data block to be transmitted form one error correction data group; and a sum of a total number of symbols of the second data block and a total number of symbols of the error correction data block is adapted to data transmission amount of a data channel for transmitting redundant data, and a ratio of the total number of symbols of the second data block and the total number of symbols of the error correction data block is less than or equal to 1:3;
   interleaving the error correction data group to obtain a target data block, wherein the target data block comprises a valid data region obtained by interleaving the first data, and a redundant data region obtained by interleaving error correction data and the second data; and the redundant data region is transmitted based on the data channel of the redundant data, the redundant data region comprises a plurality of rows of data, at least one row of data comprises both the second data and the error correction data, and at least one row of data comprises only the error correction data; and
   transmitting the target data block to a preset component based on a transmission rule of the target data block.

2. The data processing method according to claim 1, wherein the redundant data region comprises a plurality of columns of data, only the error correction data is arranged in at least one column of data, and the error correction data and the second data are alternately arranged in at least one column of data.

3. The data processing method according to claim 1 or 2, wherein the generating, based on the data to be transmitted, a data block to be transmitted and an error correction data block corresponding to the data block to be transmitted comprises:

dividing the first data into a plurality of first data blocks and dividing the second data into a plurality of second data blocks, wherein one first data block and one second data block form one data block to be transmitted, and a total number of the first data blocks is equal to a total number of the second data blocks; and
encoding the data block to be transmitted to generate the error correction data block corresponding to the data block to be transmitted.

4. The data processing method according to claim 3, wherein the dividing the first data into a plurality of first data blocks and dividing the second data into a plurality of second data blocks comprises:
dividing the first data into the plurality of first data blocks having a first preset number of bits, and dividing the second data into the plurality of second data blocks having a second preset number of bits.

5. The data processing method according to any one of claims 1-4, wherein the target data block comprises at least one error correction data group; and the interleaving the error correction data group to obtain a target data block specifically comprises: arranging data of the error correction data group in sequence based on an order of the error correction data group.

6. The data processing method according to claim 5, wherein the target data block comprises two error correction data groups, respectively referred to a first error correction data group and a second error correction data group, and each error correction data group comprises n symbols, with previous k-1 symbols being symbols in the first data block, one symbol from the k-th symbol to the n-th symbol being a symbol in the second data block, and a symbol, except the symbol in the second data block, from the k-th symbol to the n-th symbol being a symbol in the error correction data block; and
an n-th symbol in the first error correction data group is represented by a first n-symbol, an n-th symbol in the second error correction data group is represented by a second n-symbol, wherein n and k-1 are even numbers greater than 0.

7. The data processing method according to any one of claims 1-6, wherein the first data is valid data, and the second data is valid data, or one or more selected from the group consisting of identification data, attribute data, check data, and encryption information corresponding to the valid data.

8. The data processing method according to any one of claims 1-7, wherein a burst length corresponds to data amount of a plurality of target data blocks; and
the transmitting the target data block to a preset component based on a transmission rule of the target data block comprises: transmitting data of the plurality of target data blocks in sequence in the burst length.

9. A data processing method, comprising:

acquiring a target data block, wherein the target data block is obtained by interleaving based on an error correction data group, the error correction data group comprises a data block to be transmitted and an error correction data block corresponding to the data block to be transmitted, and the data block to be transmitted comprises a first data block generated by first data and a second data block generated by second data; the target data block comprises a valid data region obtained by interleaving the first data, and a redundant data region obtained by interleaving error correction data and the second data; and the redundant data region is transmitted based on a data channel of redundant data, the redundant data region comprises a plurality of rows of data, at least one row of data comprises both the second data and the error correction data, and at least one row of data comprises only the error correction data;
de-interleaving the target data block to obtain the error correction data group;
correcting a data error of the data block to be transmitted in the error correction data group based on the error correction data block in the error correction data group; and
generating data to be transmitted based on an error-corrected data block to be transmitted.

10. The data processing method according to claim 9, wherein the redundant data region comprises a plurality of columns of data, only the error correction data is arranged in at least one column of data, and the error correction data and the second data are alternately arranged in at least one column of data.

11. The data processing method according to claim 9 or 10, wherein the acquiring a target data block comprises: acquiring the target data block based on a transmission rule of a hardware; and

the transmission rule comprises:

acquiring each column of data of the target data block from different hardware ports, based on a corresponding relationship between each column of data and the hardware ports; and
acquiring a corresponding number of target data block based on a total number of target data block transmitted in a burst length.

12. The data processing method according to claim 9 or 10, wherein the acquiring a target data block comprises:

acquiring data in a burst length; and
dividing the data in the burst length into a plurality of target data blocks based on a symbol length of the target data block.

13. The data processing method according to any one of claims 9-12, wherein the target data block comprises at least one error correction data group; and the de-interleaving the target data block to obtain the error correction data group comprises:
determining symbol data belonging to a same error correction data group and an arrangement order corresponding to the symbol data based on a preset data arrangement order.

14. The data processing method according to claim 13, wherein the determining symbol data belonging to a same error correction data group and an arrangement order corresponding to the symbol data based on a preset data arrangement order, comprises:
sequentially extracting the first data block and/or the second data block and/or the error correction data block in the error correction data group when data of the error correction data group in the target data block is arranged in sequence based on an order of the error correction data group.

15. The data processing method according to any one of claims 9-14, wherein the correcting a data error of the data block to be transmitted in the error correction data group based on the error correction data block in the error correction data group comprises:

calculating a position of erroneous data in the data block to be transmitted based on the error correction data block in the error correction data group; and
correcting a data error at the position where the data block to be transmitted has erroneous data.

16. The data processing method according to any one of claims 9-15, wherein the generating data to be transmitted based on an error-corrected data block to be transmitted comprises: combining the first data block and the second data block based on a preset rule to generate the data to be transmitted, wherein a total number of the first data block is equal to a total number of the second data block.

17. The data processing method according to any one of claims 9-16, wherein the first data is valid data, and the second data is valid data, or one or more selected from the group consisting of identification data, attribute data, check data, and encryption information corresponding to the valid data.

18. A data processing apparatus, comprising:

a first data acquisition module, configured to acquire data to be transmitted, wherein the data to be transmitted comprises first data and second data;
a processing module, configured to generate a data block to be transmitted and an error correction data block corresponding to the data block to be transmitted based on the data to be transmitted, wherein the data block to be transmitted comprises a first data block generated by the first data and a second data block generated by the second data, and one data block to be transmitted and one error correction data block corresponding to the one data block to be transmitted form one error correction data group; and a sum of a total number of symbols of the second data block and a total number of symbols of the error correction data block is adapted to data transmission amount of a data channel for transmitting redundant data, and a ratio of the total number of symbols of the second data block and the total number of symbols of the error correction data block is less than or equal to 1:3;
an interleaving module, configured to interleave the error correction data group to obtain a target data block, wherein the target data block comprises a valid data region obtained by interleaving the first data and a redundant data region obtained by interleaving error correction data and the second data; and the redundant data region is transmitted based on the data channel of the redundant data, the redundant data region comprises a plurality of rows of data, at least one row of data comprises both the second data and the error correction data, and at least one row of data comprises only the error correction data; and

a data transmission module, configured to transmit the target data block to a preset component based on a transmission rule of the target data block.

19. A data processing apparatus, comprising:

a second data acquisition module, configured to acquire a target data block, wherein the target data block is obtained by interleaving based on an error correction data group, the error correction data group comprises a data block to be transmitted and an error correction data block corresponding to the data block to be transmitted, and the data block to be transmitted comprises a first data block generated by first data and a second data block generated by second data; the target data block comprises a valid data region obtained by interleaving the first data and a redundant data region obtained by interleaving error correction data and the second data; and the redundant data region is transmitted based on a data channel of redundant data, the redundant data region comprises a plurality of rows of data, at least one row of data comprises both the second data and the error correction data, and at least one row of data comprises only the error correction data;

a de-interleaving module, configured to de-interleave the target data block to obtain the error correction data group;

an error correction module, configured to correct a data error of the data block to be transmitted in the error correction data group based on the error correction data block in the error correction data group; and

a data to be transmitted generation module, configured to generate data to be transmitted based on an error-corrected data block to be transmitted.

20. A memory controller, wherein

the memory controller is configured with the data processing apparatus according to claim 18; and/or
the memory controller is configured with the data processing apparatus according to claim 19.

21. An electronic device, comprising a memory controller according to claim 20.

22. A storage medium storing one or more computer executable instructions, wherein when the one or more computer executable instructions are executed, the data processing method according to any one of claims 1 to 8 is implemented, and/or the data processing method according to any one of claims 9 to 17 is implemented.

23. A computer program product, comprising one or more computer executable instructions, wherein when the one or more computer executable instructions are executed, the data processing method according to any one of claims 1 to 8 is implemented, and/or the data processing method according to any one of claims 9 to 17 is implemented.

EP 4 761 156 A1

X4 memory chip

symbol 1

| | Data 0 | Data 1 | Data 2 | Data 3 | Data 4 | Data 5 | Data 6 | Data 7 | ECC 0 | ECC 1 |
|---|---|---|---|---|---|---|---|---|---|---|
| Burst 0 | | | | | | | | | | |
| Burst 1 | | | | | | | | | | |
| Burst 2 | | | | | | | | | | |
| Burst 3 | | | | | | | | | | |
| Burst 4 | | | | | | | | | | |
| Burst 5 | | | | | | | | | | |
| Burst 6 | | | | | | | | | | |
| Burst 7 | | | | | | | | | | |
| Burst 8 | | | | | | | | | | |
| Burst 9 | | | | | | | | | | |
| Burst 10 | | | | | | | | | | |
| Burst 11 | | | | | | | | | | |
| Burst 12 | | | | | | | | | | |
| Burst 13 | | | | | | | | | | |
| Burst 14 | | | | | | | | | | |
| Burst 15 | | | | | | | | | | |

FIG. 1

## X4 memory chip

| | Data 0 | Data 1 | Data 2 | Data 3 | Data 4 | Data 5 | Data 6 | Data 7 | ECC 0 | ECC 1 |
|---|---|---|---|---|---|---|---|---|---|---|

Burst 0
Burst 1
Burst 2
Burst 3
Burst 4
Burst 5
Burst 6
Burst 7
Burst 8
Burst 9
Burst 10
Burst 11
Burst 12
Burst 13
Burst 14
Burst 15

FIG. 2

EP 4 761 156 A1

```
                                                                    S100
┌──────────────────────────────────────────────────────────┐  ╱
│                                                            │ ╱
│            Acquiring data to be transmitted                │
│                                                            │
└──────────────────────────────────────────────────────────┘
                            │
                                                                    S110
┌──────────────────────────────────────────────────────────┐  ╱
│  Generating, based on the data to be transmitted, a data block to  │ ╱
│  be transmitted and an error correction data block corresponding   │
│            to the data block to be transmitted             │
└──────────────────────────────────────────────────────────┘
                            │
                                                                    S120
┌──────────────────────────────────────────────────────────┐  ╱
│   Interleaving the error correction data group to obtain a target  │ ╱
│                         data block                         │
└──────────────────────────────────────────────────────────┘
                            │
                                                                    S130
┌──────────────────────────────────────────────────────────┐  ╱
│  Transmitting the target data block to a preset component based    │ ╱
│          on a transmission rule of the target data block           │
└──────────────────────────────────────────────────────────┘
```

FIG. 3

```
                                                                    S111
┌──────────────────────────────────────────────────────────┐  ╱
│  Dividing the first data into a plurality of first data blocks and │ ╱
│   dividing the second data into a plurality of second data │
│                           blocks                           │
└──────────────────────────────────────────────────────────┘
                            │
                                                                    S112
┌──────────────────────────────────────────────────────────┐  ╱
│   Encoding the data block to be transmitted to generate the│ ╱
│  error correction data block corresponding to the data block to    │
│                      be transmitted                        │
└──────────────────────────────────────────────────────────┘
```

FIG. 4

FIG. 5

FIG. 6

EP 4 761 156 A1

First
target
data
block

Second
target
data
block

Valid data region    Redundant data region

FIG. 7

Data to be
transmitted

Encoding
module

Interleaving
module

Target data
block

Memory

FIG. 8

Acquiring a target data block — S200

De-interleaving the target data block to obtain the error correction data group — S210

Correcting a data error of the data block to be transmitted in the error correction data group based on the error correction data block in the error correction data group — S220

Generating data to be transmitted based on an error-corrected data block to be transmitted — S230

FIG. 9

Error-corrected data
to be transmitted

Error correction
module

Decoding
module

De-interleaving
module

Target data block

Memory

FIG. 10

FIG. 11

| Burst | Data 0 | | | | Data 1 | | | | Data 2 | | | | Data 3 | | | | Data 4 | | | | Data 5 | | | | Data 6 | | | | Data 7 | | | | ECC 0 | | | | ECC 1 | | | |
|---|---|---|---|---|---|---|---|---|---|---|---|---|---|---|---|---|---|---|---|---|---|---|---|---|---|---|---|---|---|---|---|---|---|---|---|---|---|---|---|---|
| Burst 0 | 0 | 2 | 4 | 6 | 8 | 10 | 12 | 14 | 16 | 18 | 20 | 22 | 24 | 26 | 28 | 30 | 32 | 34 | 36 | 38 | 40 | 42 | 44 | 46 | 48 | 50 | 52 | 54 | 56 | 58 | 60 | 62 | 0 | 2 | 4 | 6 | 8 | 10 | 12 | 14 |
| Burst 1 | 1 | 3 | 5 | 7 | 9 | 11 | 13 | 15 | 17 | 19 | 21 | 23 | 25 | 27 | 29 | 31 | 33 | 35 | 37 | 39 | 41 | 43 | 45 | 47 | 49 | 51 | 53 | 55 | 57 | 59 | 61 | 63 | 1 | 3 | 5 | 7 | 9 | 11 | 13 | 15 |
| Burst 2 | 64 | 66 | 68 | 70 | 72 | 74 | 76 | 78 | 80 | 82 | 84 | 86 | 88 | 90 | 92 | 94 | 96 | 98 | 100 | 102 | 104 | 106 | 108 | 110 | 112 | 114 | 116 | 118 | 120 | 122 | 124 | 126 | 16 | 18 | 20 | 22 | 24 | 26 | 28 | 30 |
| Burst 3 | 65 | 67 | 69 | 71 | 73 | 75 | 77 | 79 | 81 | 83 | 85 | 87 | 89 | 91 | 93 | 95 | 97 | 99 | 101 | 103 | 105 | 107 | 109 | 111 | 113 | 115 | 117 | 119 | 121 | 123 | 125 | 127 | 17 | 19 | 21 | 23 | 25 | 27 | 29 | 31 |
| Burst 4 | 128 | 130 | 132 | 134 | 136 | 138 | 140 | 142 | 144 | 146 | 148 | 150 | 152 | 154 | 156 | 158 | 160 | 162 | 164 | 166 | 168 | 170 | 172 | 174 | 176 | 178 | 180 | 182 | 184 | 186 | 188 | 190 | 32 | 34 | 36 | 38 | 40 | 42 | 44 | 46 |
| Burst 5 | 129 | 131 | 133 | 135 | 137 | 139 | 141 | 143 | 145 | 147 | 149 | 151 | 153 | 155 | 157 | 159 | 161 | 163 | 165 | 167 | 169 | 171 | 173 | 175 | 177 | 179 | 181 | 183 | 185 | 187 | 189 | 191 | 33 | 35 | 37 | 39 | 41 | 43 | 45 | 47 |
| Burst 6 | 192 | 194 | 196 | 198 | 200 | 202 | 204 | 206 | 208 | 210 | 212 | 214 | 216 | 218 | 220 | 222 | 224 | 226 | 228 | 230 | 232 | 234 | 236 | 238 | 240 | 242 | 244 | 246 | 248 | 250 | 252 | 254 | 48 | 50 | 52 | 54 | 56 | 58 | 60 | 62 |
| Burst 7 | 193 | 195 | 197 | 199 | 201 | 203 | 205 | 207 | 209 | 211 | 213 | 215 | 217 | 219 | 221 | 223 | 225 | 227 | 229 | 231 | 233 | 235 | 237 | 239 | 241 | 243 | 245 | 247 | 249 | 251 | 253 | 255 | 49 | 51 | 53 | 55 | 57 | 59 | 61 | 63 |
| Burst 8 | 0 | 2 | 4 | 6 | 8 | 10 | 12 | 14 | 16 | 18 | 20 | 22 | 24 | 26 | 28 | 30 | 32 | 34 | 36 | 38 | 40 | 42 | 44 | 46 | 48 | 50 | 52 | 54 | 56 | 58 | 60 | 62 | 0 | 2 | 4 | 6 | 8 | 10 | 12 | 14 |
| Burst 9 | 1 | 3 | 5 | 7 | 9 | 11 | 13 | 15 | 17 | 19 | 21 | 23 | 25 | 27 | 29 | 31 | 33 | 35 | 37 | 39 | 41 | 43 | 45 | 47 | 49 | 51 | 53 | 55 | 57 | 59 | 61 | 63 | 1 | 3 | 5 | 7 | 9 | 11 | 13 | 15 |
| Burst 10 | 64 | 66 | 68 | 70 | 72 | 74 | 76 | 78 | 80 | 82 | 84 | 86 | 88 | 90 | 92 | 94 | 96 | 98 | 100 | 102 | 104 | 106 | 108 | 110 | 112 | 114 | 116 | 118 | 120 | 122 | 124 | 126 | 16 | 18 | 20 | 22 | 24 | 26 | 28 | 30 |
| Burst 11 | 65 | 67 | 69 | 71 | 73 | 75 | 77 | 79 | 81 | 83 | 85 | 87 | 89 | 91 | 93 | 95 | 97 | 99 | 101 | 103 | 105 | 107 | 109 | 111 | 113 | 115 | 117 | 119 | 121 | 123 | 125 | 127 | 17 | 19 | 21 | 23 | 25 | 27 | 29 | 31 |
| Burst 12 | 128 | 130 | 132 | 134 | 136 | 138 | 140 | 142 | 144 | 146 | 148 | 150 | 152 | 154 | 156 | 158 | 160 | 162 | 164 | 166 | 168 | 170 | 172 | 174 | 176 | 178 | 180 | 182 | 184 | 186 | 188 | 190 | 32 | 34 | 36 | 38 | 40 | 42 | 44 | 46 |
| Burst 13 | 129 | 131 | 133 | 135 | 137 | 139 | 141 | 143 | 145 | 147 | 149 | 151 | 153 | 155 | 157 | 159 | 161 | 163 | 165 | 167 | 169 | 171 | 173 | 175 | 177 | 179 | 181 | 183 | 185 | 187 | 189 | 191 | 33 | 35 | 37 | 39 | 41 | 43 | 45 | 47 |
| Burst 14 | 192 | 194 | 196 | 198 | 200 | 202 | 204 | 206 | 208 | 210 | 212 | 214 | 216 | 218 | 220 | 222 | 224 | 226 | 228 | 230 | 232 | 234 | 236 | 238 | 240 | 242 | 244 | 246 | 248 | 250 | 252 | 254 | 48 | 50 | 52 | 54 | 56 | 58 | 60 | 62 |
| Burst 15 | 193 | 195 | 197 | 199 | 201 | 203 | 205 | 207 | 209 | 211 | 213 | 215 | 217 | 219 | 221 | 223 | 225 | 227 | 229 | 231 | 233 | 235 | 237 | 239 | 241 | 243 | 245 | 247 | 249 | 251 | 253 | 255 | 49 | 51 | 53 | 55 | 57 | 59 | 61 | 63 |

FIG. 12

300

First data
acquisition
module

310

Processing
module

320

Interleaving
module

330

Data
transmission
module

FIG. 13

400

Second data
acquisition
module

410

De-interleaving
module

420

Error
correction
module

430

Data to be
transmitted
generation module

FIG. 14

## INTERNATIONAL SEARCH REPORT

| International application No. |
| --- |
| **PCT/CN2024/141405** |

### A.    CLASSIFICATION OF SUBJECT MATTER

H04L1/1812(2023.01)i

According to International Patent Classification (IPC) or to both national classification and IPC

### B.    FIELDS SEARCHED

Minimum documentation searched (classification system followed by classification symbols)

IPC:H04L1/-

Documentation searched other than minimum documentation to the extent that such documents are included in the fields searched

Electronic data base consulted during the international search (name of data base and, where practicable, search terms used)

CNABS, CNTXT, ENTXTC, CNKI: 纠错, ECC, 交织, 编码, 传输, 去交织, 有效, 第一, 数据, 额外, 第二, 标识, 属性, 校验, 加密, 分割, 划分, 冗余; VEN, USTXT, WOTXT, EPTXT, IEEE: correct+, cod+, encod+, error, data, ECC, interleav+, transmi +, verif+, divid+, division, partition+, segment, redundancy

### C.    DOCUMENTS CONSIDERED TO BE RELEVANT

| Category* | Citation of document, with indication, where appropriate, of the relevant passages | Relevant to claim No. |
| --- | --- | --- |
| A | CN 117811590 A (HYGON INFORMATION TECHNOLOGY CO., LTD.) 02 April 2024 (2024-04-02)<br>entire document | 1-23 |
| A | CN 116848809 A (HUAWEI TECHNOLOGIES CO., LTD.) 03 October 2023 (2023-10-03)<br>entire document | 1-23 |
| A | CN 116054842 A (CHENGDU HAIGUANG INTEGRATED CIRCUIT DESIGN CO., LTD.) 02 May 2023 (2023-05-02)<br>entire document | 1-23 |
| A | JP 2013198128 A (FUJI XEROX CO., LTD.) 30 September 2013 (2013-09-30)<br>entire document | 1-23 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **05 February 2025** | **21 February 2025** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/141405**

| Patent document cited in search report | | | Publication date (day/month/year) | Patent family member(s) | | | Publication date (day/month/year) |
|---|---|---|---|---|---|---|---|
| CN | 117811590 | A | 02 April 2024 | None | | | |
| CN | 116848809 | A | 03 October 2023 | WO | 2022178818 | A1 | 01 September 2022 |
| | | | | EP | 4287533 | A1 | 06 December 2023 |
| | | | | US | 2023403099 | A1 | 14 December 2023 |
| | | | | EP | 4287533 | A4 | 27 March 2024 |
| CN | 116054842 | A | 02 May 2023 | WO | 2024124709 | A1 | 20 June 2024 |
| JP | 2013198128 | A | 30 September 2013 | JP | 5842697 | B2 | 13 January 2016 |

Form PCT/ISA/210 (patent family annex) (July 2022)

**EP 4 761 156 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410840320